(19) Europäisches Patentamt
European Patent Office
Office européen des brevets

(11) Veröffentlichungsnummer: **0 287 948 B1**

(12) **EUROPÄISCHE PATENTSCHRIFT**

(45) Veröffentlichungstag der Patentschrift: **10.06.92**

(51) Int. Cl.⁵: **C08G 75/02**, C08G 85/00

(21) Anmeldenummer: **88105931.5**

(22) Anmeldetag: **14.04.88**

# (54) Verfahren zur Reinigung von Polyarylensulfiden.

(30) Priorität: **24.04.87 DE 3713669**

(43) Veröffentlichungstag der Anmeldung:
**26.10.88 Patentblatt 88/43**

(45) Bekanntmachung des Hinweises auf die Patenterteilung:
**10.06.92 Patentblatt 92/24**

(84) Benannte Vertragsstaaten:
**BE DE FR GB IT**

(56) Entgegenhaltungen:
**EP-A- 0 175 968**
**EP-A- 0 220 490**
**DE-A- 3 143 992**
**US-A- 4 071 509**

(73) Patentinhaber: **BAYER AG**
**W-5090 Leverkusen 1 Bayerwerk(DE)**

(72) Erfinder: **Alewelt, Wolfgang, Dr.**
**Stratumer Feld 17**
**W-4150 Krefeld 12(DE)**
Erfinder: **Alfes, Franz, Dr.**
**Kruse Bömke 7**
**W-4150 Krefeld 1(DE)**
Erfinder: **Eisermann, Wolfgang, Dr.**
**Auf der Krone 22**
**W-4000 Düsseldorf 31(DE)**
Erfinder: **Tresper, Erhard, Dr.**
**Moerser Strasse 394**
**W-4150 Krefeld 1(DE)**

**EP 0 287 948 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Reinigung von gegebenenfalls verzweigten Polyarylensulfiden (PPS). Die erfindungsgemäß gereinigten Polyarylensulfide zeichnen sich durch einen verminderten Gehalt an aschebildenden Verunreinigungen aus.

Polyarylensulfide, ihre Herstellung und Aufarbeitung sind bekannt (z.B. US-PS 40 71 509, JA-PS 57 108-135, DE-OS 31 43 992, US-PS 33 54 129, 34 57 242, 34 78 000, 36 87 907, 37 07 528, 38 39 302, 39 41 664, 39 56 060, 40 46 749, 41 78 435, EP 79 144).

So ist beispielsweise bekannt, das Lösungsmittel, in dem die Polymerisation der Halogenaromaten und der Schwefelquelle durchgeführt wurde, aus dem Reaktionsgemisch zu verdampfen und anorganische Salze mit Wasser anschließend aus dem verbleibenden Rückstand herauszuwaschen. Ebenso kann das Reaktionsgemisch nach der Polymerisationsreaktion ohne Abtrennung des Lösungsmittels sofort in Wasser gegeben werden und der ausgefällte Rückstand nach Abrennen gewaschen werden. Auch ist bekannt, den Rückstand zusätzlich mit organischen Lösungsmitteln wie Aceton, aromatischen Kohlenwasserstoffen, Dimethylsulfoxid (DMSO) und N-Methylpyrrolidon (NMP) zu waschen.

Polyarylensulfide können auch z.B. durch Erhitzen in Wasser mit Alkaliacetaten bis auf Temperaturen kurz unter ihrem Schmelzpunkt (DE-OS 31 43 992) gereinigt werden, durch Extraktion mit Lösungsmittelgemischen wie N-Methylpyrrolidon und Ethylenglykol (JA-PS 57 108-135), durch Erhitzen in organischen Amiden in Gegenwart bestimmter Alkalisalze (US-PS 40 71 509) usw..

Der Gehalt an aschebildenden Verunreinigungen in PPS kann auch durch Behandlung von wäßrigen PPS-Suspensionen bei Temperaturen über 200 °C mit Luftsauerstoff vermindert werden. Dabei kann jedoch unkontrolliert eine Verzweigung oder Vernetzung des Produktes eintreten (US-PS 43 76 190).

Gereinigtes PPS hat weniger aschebildende Verunreinigungen, spaltet bei seiner Verarbeitung weniger flüchtige Verbindungen ab und verursacht daher weniger Korrosion der bei seiner Verarbeitung eingesetzten Werkzeuge. Außerdem können im PPS verbleibende Verunreinigungen bei der Verwendung der Polyarylensulfide für Anwendungen für elektrische Bauteile stören.

Es wurde gefunden, daß man den Gehalt an aschebildenden Verunreinigungen im PPS deutlich vermindern kann, wenn man feuchte Polyarylensulfide, wie sie z.B. nach der Wäsche zur Extraktion der löslichen Verunreinigungen bei der Herstellung erhalten werden, unter hohem Druck bei gleichzeitiger Scherung z.B. in geeigneten Preßbändern oder zwischen Preßwalzen entfeuchtet .

Gegenstand der Erfindung ist daher ein Verfahren zur Entfeuchtung oder Isolierung von Polyarylensulfiden unter Verminderung des Gehaltes an aschebildenden Verunreinigungen, dadurch gekennzeichnet, daß feuchte Polyarylensulfide mit einem Feststoffgehalt von 15 bis 30% unter einem Druck von 5 bis 400 bar unter gleichzeitiger Scherung entfeuchtet werden.

Mit dem erfindungsgemäßen Verfahren können z.B. Polyarylensulfide, die auch verzweigt sein können, behandelt werden, welche z.B. hergestellt worden sind durch die bekannte Umsetzung von

a) 50 bis 100 Mol-% Dihalogenaromaten der Formel

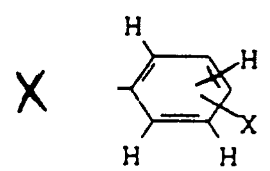

(I),

und 0 bis 50 Mol-% Dihalogenaromaten der Formel

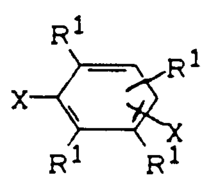

(II),

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein

kann, wobei zwei zueinander orthoständige Reste $R^1$ zu einem aromatischen oder heterocyclischen Ring verknüpft sein können und

b) 0 bis 5 Mol-%, bevorzugt 0,05 bis 2,5 Mol-%, bezogen auf die Summe der Dihalogenaromaten der Formel (I) und (II), eines Tri- oder Tetrahalogenaromaten der Formel

$ArX_n$ (III),

wobei

Ar ein aromatischer oder heterocyclischer Rest ist,
X für Halogen wie Chlor oder Brom und
n für die Zahl 3 oder 4 steht und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- oder Kaliumhydroxid, wobei das molare Verhältnis von (a + b):c im Bereich von 0,85:1 bis 1,15:1, vorzugsweise 0,90:1 bis 1,05:1, liegt in

d) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, und

e) Wasser in Form von Hydrat- oder freiem Wasser, wobei das molare Verhältnis von c:d im Bereich von 1:0 bis 1:6 liegt, bei einer Reaktionstemperatur von 160 ° C bis 270 ° C, gegebenenfalls unter Überdruck.

Die erhaltene Reaktionsmischung kann nach der Polymerisationsreaktion in ein Fällmittel eingetragen werden. Aus dem ausgefallenen Polyarylensulfid können die löslichen Verunreinigungen mit Wasser und/oder anderen Extraktionsmitteln ausgewaschen werden.

So erhaltenes PPS kann grob-/feinpulvrig oder faser-oder plättchenförmig sein. Wenn es sich als vorteilhaft erweist, kann es dann in eine entsprechende andere Form vor der Weiterverarbeitung gebracht werden und ist (Lösungsmittel/Wasser) feucht.

Weiterhin können Polyphenylensulfide im erfindungsgemäßen Verfahren, unabhängig von ihrem Herstellungsverfahren, z.B. handelsübliche, ebenfalls nach geeigneter Aufbereitung von aschebildenden Rückständen befreit werden. Die so hergestellten feuchten Polyarylensulfide haben nach einer sich gegebenenfalls anschließenden Filtration oder Extraktion z.B. über Druck- oder Saugfilter, einen Feststoffgehalt von 15 bis 35 %.

Erfindungsgemäß werden die Polyarylensulfide weiter mechanisch entfeuchtet, wobei der Feststoffgehalt auf 40 bis 90 %, vorzugsweise 50 bis 95 % ansteigt. Der Gehalt an aschebildenden Verunreinigungen nimmt erfindungsgemäß nicht nur porportional der entfernten Flüssigkeitsmenge ab, wie dies beim üblichen Filtern oder Zentrifugen der Fall ist, sondern weitaus stärker.

Das nach einer bei den bekannten Herstellverfahren üblichen Vorfiltration erhaltene feuchte PPS mit 15 bis 35 % Feststoffgehalt wird beim erfindungsgemäßen Verfahren kontinuierlich oder diskontinuierlich in geeigneten, bekannten Maschinen eindosiert, die einen hohen Druck von 5 bis 400 bar unter gleichzeitiger Scherung auf das Produkt aufbringen können.

Erfindungsgemäß können als solche Maschinen z.B. Preßbänder oder Hochdruckpreßwalzen eingesetzt werden. Entsprechend der Maschinenausführung ist es vorteilhaft als Kenngrößen neben dem Druck z.B. auch Liniendruck bei Preßbändern bzw. Kraftaufnahme bei Hochdruckpreßwalzen, Geschwindigkeitprofile paarweise angeordneter Preßwalzen, Oberflächenbeschaffenheit von Walzen oder Bändern mit zu berücksichtigen. Das Einbringen der Scherkräfte kann durch bekannte Maßnahmen erfolgen, beispielsweise durch unterschiedliche Geschwindigkeit der Walze eines Walzenpaares oder durch Abpressen zwischen einem Walzenpaar mit unterschiedlicher Oberflächenbeschaffenheit der einzelnen Walzen.

## Beispiele

Die Herstellung eines Polyphenylensulfids nach einer bekannten Vorschrift (z.B. DE-OS 34 28 984).

In einem 2-l-Dreihalskolben, der mit Thermometer, Rührer und Kolonne mit Destillatteiler ausgerüstet ist, werden unter Stickstoff 1110 g N-Methylcaprolactam, 325,5 g Natriumsulfidhydrat (= 2,45 Mol $Na_2S$), 2,4 g 50 %ige Natronlauge, 341,1 g 1,4-Dichlorbenzol (= 2,32 Mol), 28,53 g Natriumacetat und 5,07 g $\epsilon$-Aminocapronsäure (0.035 Mol) vorgelegt. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt.

Anschließend wird das Reaktionsgemisch unter kräftigem Rühren in 1 l Isopropanol eingetragen. Das

ausgefallene Produkt wird viermal mit der vierfachen Menge Fällungsmittel gewaschen und anschließend zur Entfernung von Restmengen anorganischer Salze mit Wasser elektrolytfrei gewaschen (Leitfähigkeit des Waschwassers <10 µ S entsprechend einem Natriumchloridgehalt von <5 ppm).

Beispiel 1: als Vergleichsbeispiel Trocknen bei erhöhter Temperatur im Vakuum

Ein z.B. nach oben angegebener Vorschrift erhaltenes Polyarylensulfid mit einem Feststoffgehalt von 18 % wird in einem Trockenschrank bei 140 °C im Vakuum bei 10 mbar 12 h getrocknet. Anschließend wird der Gehalt an aschebildenden Verunreinigungen bestimmt (siehe Tabelle).

Beispiel 2: als Vergleichsbeispiel Abtrennen von PPS durch Zentrifugieren

Ein Polyphenylensulfid wie in Beispiel 1 wird in eine Zentrifuge gegeben und 5 min geschleudert, wobei auf das Produkt ein Druck von ~20 bar einwirkt. Die Ergebnisse sind in der Tabelle angegeben.

Beispiel 3: als Vergleichsbeispiel Trocknen auf Rollenwalzen

Beispiel 2 wird wiederholt, wobei statt der Zentrifuge ein Preßband eingesetzt wird, wobei zwischen 3 Rollenpaaren ein steigender Druck von zuletzt ~80 bar auf das Produkt aufgebracht wird und die Bandgeschwindigkeiten der beiden Bänder gleich sind. Die Ergebnisse sind in der Tabelle angegeben.

Beispiel 4: als Vergleichsbeispiel Trocknen auf Hochdruckpreßwalzen

Beispiel 2 wird wiederholt, wobei statt der Zentrifugen ein Hochdruckpreßwalzenpaar eingesetzt wird, wobei ein Druck von -200 bar auf das Produkt aufgebracht wird. Die Walzenoberflächen sind glatt.

Erfindungsgemäße Beispiele:

Beispiel 5

Beispiel 3 wird wiederholt, wobei die Bandgeschwindigkeiten um 5 % unterschiedlich sind.

Beispiel 6

Beispiel 4 wird wiederholt, wobei die Walzenoberflächen zur Aufbringung einer Scherung mit 5 x 5 cm Quadraten von 2 mm Tiefe versehen sind.

Die Bestimmung des Gehaltes an aschebildenden Verunreinigungen erfolgt durch Verbrennung in einem Muffelofen bei 1000 °C in Gegenwart von Luftsauerstoff. Der hier verbleibende Rückstand wird als aschebildender Rückstand bezeichnet.

Tabelle

| Beispiel | Feststoffgehalt nach mechanischer Entwässerung (%) | Gehalt an aschebildender Verunreinigung (% bezogen auf PPS) |
|---|---|---|
| 1 (Vergleich) | 18 | 0,75 |
| 2 (Vergleich) | 55 | 0,21 |
| 3 (Vergleich) | 63 | 0,16 |
| 4 (Vergleich) | 90 | 0,11 |
| 5 erfindungsgemäß | 65 | 0,03 |
| 6 erfindungsgemäß | 90 | 0,01 |

## Patentansprüche

1. Verfahren zur Entfeuchtung von Polyarylensulfiden unter Verminderung des Gehaltes an aschebildenden Verunreinigungen, dadurch gekennzeichnet, daß feuchte Polyarylensulfide mit einem Feststoffgehalt von 15 bis 35% unter einem Druck von 5 bis 400 bar unter gleichzeitiger Scherung mechanisch entfeuchtet werden.

## Claims

1. A process for removing moisture from polyarylene sulfides and reducing the content of ash-forming impurities, characterized in that moist polyarylene sulfides having a solids content of 15 to 35% are mechnically freed from moisture under a pressure of 5 to 400 bar in the presence of shear forces.

## Revendications

1. Procédé de déshydratation de polyarylènesulfures en réduisant la teneur en impuretés productrices de cendres caractérisé en ce que des polyarylènesulfures dont la teneur en matières solides est de 15 à 35 %, sont déshydratés mécaniquement à une pression de 5 à 400 bar tout en étant soumis à un cisaillement simultané.